# EUROPEAN PATENT APPLICATION

(11) **EP 4 393 764 A1**
(43) Date of publication of application: **03.07.2024**
(21) Application number: 22860120.9
(22) Date of filing: 21.07.2022
(51) Int. Cl.: B60L 53/62, B60L 53/64, H02J 3/28

(54) **NEW-ENERGY CHARGING SYSTEM, AND ALTERNATING-CURRENT CHARGING PILE AND CHARGING METHOD THEREFOF**

(30) Priority: 23.08.2021 CN 202110969436
(71) Applicant: Sungrow Power Supply Co., Ltd., Hefei, Anhui 230088 (CN)
(72) Inventor: WANG, Zhenshan, Hefei, Anhui 230088 (CN); WANG, Shu, Hefei, Anhui 230088 (CN); YANG, Yuefeng, Hefei, Anhui 230088 (CN); CHEN, Xin, Hefei, Anhui 230088 (CN)
(74) Representative: Locatelli, Massimo
(86) International application number: PCT/CN2022/106954
(87) International publication number: WO 2023/024774

(57) **Abstract**

A new-energy charging system, and an alternating-current charging pile and a charging method thereof. The charging method comprises: when an alternating-current charging pile is in a power-following mode, measuring an available input power of a system where the alternating-current charging pile is located; when the available input power is greater than or equal to a single-phase threshold value and is less than a three-phase threshold value, controlling the alternating-current charging pile to provide single-phase charging for an electric vehicle by means of a charging gun of the charging pile itself; and when the available input power is greater than or equal to the three-phase threshold value, controlling the alternating-current charging pile to provide three-phase charging for an electric vehicle by means of the charging gun of the charging pile itself. In the charging method, the output power of an alternating-current charging pile is adjusted by means of adjusting the number of charging phases, such that the output power of the alternating-current charging pile follows an available input power, thereby achieving the optimal energy efficiency and also achieving carbon balance.

## Description

The present application claims priority to Chinese Patent Application No. 202110969436.1, titled "RENEWABLE ENERGY CHARGING SYSTEM, ALTERNATING CURRENT CHARGING STATION AND CHARGING METHOD APPLIED TO THE SAME", filed on August 23, 2021 with the China National Intellectual Property Administration, which is incorporated herein by reference in its entirety.

### FIELD

The present disclosure relates to the technical field of alternating current charging stations, and in particular to a renewable energy charging system, an alternating current charging station and a charging method applied to the alternating current charging station.

### BACKGROUND

With electric vehicles develop massively, demands for alternating current charging stations are increasing. The input end of the alternating current charging station is directly connected to an alternating current power grid, and the output end of the alternating current charging station is equipped with a charging gun, to charge the electric vehicle through the charging gun.

The existing alternating current charging station operates independently, that is, fails to acquire the photovoltaic power capacity in real time and therefore fails to adapt its output power to the photovoltaic system in real time, hindering the alternating current charging station from being widely used.

### SUMMARY

In view of this, a renewable energy charging system, an alternating current charging station and a charging method applied to the alternating current charging station are provided according to the present disclosure, to adapt the output power of the alternating current charging station to the available input power, for the purpose of optimal energy efficiency.

In a first aspect, a charging method applied an alternating current charging station is provided according to the embodiments of the present disclosure, the method includes: measuring an available input power of a system where the alternating current charging station is arranged; controlling the alternating current charging station to supply single-phase power to an electric vehicle through a charging gun of the alternating current charging station when the measured available input power is greater than or equal to a single-phase threshold and less than a three-phase threshold, where the single-phase threshold is less than the three-phase threshold; and controlling the alternating current charging station to supply three-phase power to the electric vehicle through the charging gun when the measured available input power is greater than or equal to the three-phase threshold.

In an embodiment, the method further includes: controlling the alternating current charging station to be in a sleep mode instead of charging the electric vehicle when the measured available input power is less than the single-phase threshold, after the measuring the available input power.

In an embodiment, the method further includes: adapting output power of the charging gun to the available input power in real time while charging the electric vehicle by the alternating current charging station through the charging gun.

In an embodiment, the available input power is grid power or renewable energy power.

In an embodiment, the single-phase threshold is a product of a single-phase voltage and a single-phase current. The three-phase threshold is a product of a three-phase voltage and a three-phase current. The single-phase current and the three-phase current are constant, and the single-phase voltage and the three-phase voltage each are obtained by converting an input voltage of the alternating current charging station.

In an embodiment, the controlling the alternating current charging station to supply the single-phase power to the electric vehicle through the charging gun includes: closing relays on any two of three-phase cables and a neutral cable. The controlling the alternating current charging station to supply the three-phase power to the electric vehicle through the charging gun includes: closing all relays on the three-phase cables.

In an embodiment, the method further includes: controlling the alternating current charging station to respond to a charging gun signal to perform a switch between the single-phase power and the three-phase power when a demand for the switch is detected during the charging, after the measuring the available input power.

In an embodiment, the demand for the switch is detected when it is detected that the available input power changes from the single-phase threshold to the three-phase threshold, or when it is detected that the available input power changes from the three-phase threshold to the single-phase threshold.

In an embodiment, the controlling the alternating current charging station to respond to the charging gun signal to perform the switch includes: connecting the alternating current charging station to the electric vehicle in a case that the charging gun signal is a first signal; and disconnecting the alternating current charging station from the electric vehicle in a case that the charging gun signal is a second signal.

In an embodiment, the method further includes: determining whether the alternating current charging station is in a power tracking mode before the measuring the available input power. The output power of the alternating current charging station is adapted to the available input power in the power tracking mode, and the available input power is measured when it is determined that the alternating current charging station is in the power tracking mode.

In an embodiment, the method further includes: determining that the alternating current charging station is in a normal operation mode and controlling the alternating current charging station to directly output maximum power when it is determined that the alternating current charging station is not in a power tracking mode, after determining whether the alternating current charging station is in the power tracking mode.

In a second aspect, an alternating current charging station is provided according to the embodiments of the present disclosure. The alternating current charging station includes: a controller, multiple relays and at least one charging gun. An output port of the charging gun serves as an output end of the alternating current charging station. An input end of the alternating current charging station is connected to the charging gun through three-phase cables. Each of the three-phase cables is provided with at least one of the relays. A neutral cable in the alternating current charging station is provided with at least one of the relays. All the relays are controlled by the controller. The controller is configured to perform the charging method in the first aspect.

In an embodiment, the input end of the alternating current charging station is connected to the charging gun through the neutral cable, and the neutral cable is provided with at least one of the relays.

In an embodiment, the alternating current charging station further includes a metering module. The metering module is arranged between the relays and the input end of the alternating current charging station. The controller is communicatively connected to the metering module.

In an embodiment, the controller is further configured to communicate with at least one of a power conversion unit in a system where the controller is arranged and the charging gun.

In an embodiment, the alternating current charging station further includes a human-computer interaction module configured to communicated with the controller.

In a third aspect, a renewable energy charging system is provided according to the embodiments of the present disclosure. The renewable energy charging system includes: a power conversion unit, a renewable energy module and an alternating current charging station. The renewable energy module is connected to the alternating current charging station through the power conversion unit. The power conversion unit or the alternating current charging station is configured to perform the charging method in the first aspect.

In an embodiment, the alternating current charging station includes multiple relays and at least one charging gun. An input end of the alternating current charging station is connected to the charging gun through three-phase cables. Each of the three-phase cables is provided with at least one relay. An output port of the charging gun serves as an output end of the alternating current charging station.

In an embodiment, all the relays are controlled by a controller inside the power conversion unit for the power conversion unit to perform the charging method. The alternating current charging station further includes a controller for the alternating current charging station to perform the charging method. All the relays are controlled by the controller of the alternating current charging station. The controller of the alternating current charging station is communicatively connected to the metering module.

In an embodiment, the alternating current charging station is integrated with the power conversion unit.

In an embodiment, the alternating current charging station is independently arranged in the renewable energy charging system. The controller of the alternating current charging station is configured to communicate with the controller inside the power conversion unit in real time.

In an embodiment, the alternating current charging station 30 communicates with the power conversion unit 20 as defined in RS485.

In an embodiment, the renewable energy module includes at least one of a solar power unit, a wind power unit, an energy storage device, and a hydrogen energy unit.

Based on the above technical solutions, a charging method is provided according to the present disclosure. The method includes: measuring an available input power of a system where the alternating current charging station is arranged when the alternating current charging station is operating in a power tracking mode; controlling the alternating current charging station to supply single-phase power to an electric vehicle through a charging gun of the alternating current charging station when the measured available input power is greater than or equal to a single-phase threshold and less than a three-phase threshold, where the single-phase threshold is less than the three-phase threshold; and controlling the alternating current charging station to supply three-phase power to the electric vehicle through the charging gun when the measured available input power is greater than or equal to the three-phase threshold. Therefore, the output power of the alternating current charging station can be regulated by switching between the single-phase power and the three-phase power. That is, the output power of the alternating current charging station is adapted to the available input power, thereby achieving optimal energy efficiency and carbon balance.

### BRIEF DESCRIPTION OF THE DRAWINGS

For clearer illustration of the technical solutions according to embodiments of the present disclosure or conventional techniques, hereinafter briefly described are the drawings to be applied in the embodiments of the present disclosure or conventional techniques. Apparently, the drawings in the following descriptions are only some embodiments of the present disclosure and other drawings may be obtained by those ordinary skilled in the art based on the provided drawings without creative efforts.
Figure 1 is a schematic diagram illustrating a charging method applied to an alternating current charging station according to an embodiment of the present disclosure;
Figure 2 is a schematic diagram illustrating the alternating current charging station according to an embodiment of the present disclosure;
Figure 3 is a schematic diagram illustrating the alternating current charging station according to another embodiment of the present disclosure;
Figure 4 is a schematic diagram illustrating the alternating current charging station according to another embodiment of the present disclosure;
Figure 5 is a schematic diagram illustrating a renewable energy charging system according to an embodiment of the present disclosure;
Figure 6 is a schematic diagram illustrating the renewable energy charging system according to another embodiment of the present disclosure;
Figure 7 is a schematic diagram illustrating the renewable energy charging system according to another embodiment of the present disclosure; and
Figure 8 is a schematic diagram illustrating the renewable energy charging system according to another embodiment of the present disclosure.

### DETAILED DESCRIPTION OF EMBODIMENTS

The technical solutions in the embodiments of the present disclosure are clearly and thoroughly described below in conjunction with the drawings in the embodiments of the present disclosure, so that the purpose, technical solutions and advantages of the embodiments of the present disclosure are comprehensible. It is apparent that the described embodiments are some rather than all of the embodiments of the present disclosure. Based on the embodiments of the present disclosure, all other embodiments obtained by those ordinary skilled in the art without creative efforts belong to the protection scope of the present disclosure.

In the present disclosure, the terms "include", "comprise" or any variant thereof are intended to be nonexclusive, such that a process, method, article or device including a series of elements includes not only those elements but also other elements which have not been listed definitely or an element(s) inherent in the process, method, article or device. Unless expressively limited otherwise, a process, method, article or device limited by "comprising/including a(n) ..." does not exclude existence of other identical elements in such process, method, article or device.

A charging method applied to an alternating current charging station is provided according to embodiments of the present disclosure, to solve the problem that the existing alternating current charging station fails to be widely used due to the fact that the alternating current charging station operates independently, i.e., fails to acquire the photovoltaic power capacity in real time and therefore only slightly adapts or even fails to adapt its output power to the photovoltaic system in real time.

The connection of the alternating current charging station is as follows. A first end of the alternating current charging station is connected to a renewable energy module through a power conversion unit, to receive power outputted by the renewable energy module. A charging gun in the alternating current charging station is configured to connect to an electric vehicle, to charge the electric vehicle.

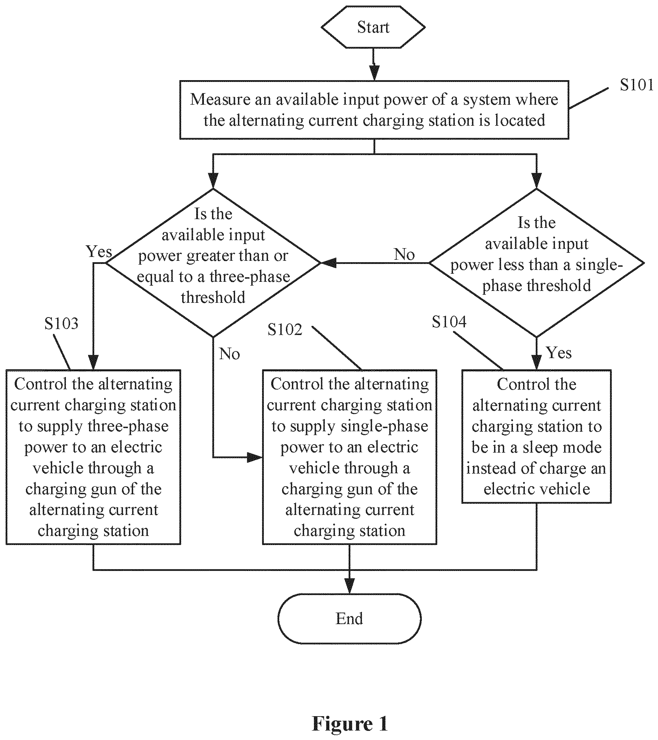

Referring to Figure 1, the charging method includes the following steps S101 to S104.

In S 101, an available input power of a system to which the alternating current charging station is connected is measured.

As can be seen from the above description, the available input power may be the output power of the renewable energy module, the output power of the power conversion unit, or the power received by the alternating current charging station, depends on the practical situations, and all of which are within the protection scope of the present disclosure.

In practice, the available input power is grid power or renewable energy power, depends on the practical situations, and all of which are within the protection scope of the present disclosure.

In a case that the available input power is greater than or equal to a single-phase threshold and less than a three-phase threshold, step S102 is executed. In a case that the available input power is greater than or equal to the three-phase threshold, step S 103 is executed.

In S102, the alternating current charging station is controlled to supply single-phase power to the electric vehicle through the charging gun of the alternating current charging station.

The single-phase threshold is less than the three-phase threshold.

The available input power, when greater than or equal to the single-phase threshold and less than the three-phase threshold, can supply the single-phase power rather than three-phase power. Therefore, the alternating current charging station supplies the single-phase power to the electric vehicle through its own charging gun.

In practice, the single-phase threshold is a product of a single-phase voltage and a single-phase current.

The single-phase current is constant, and the single-phase voltage is obtained by converting the input voltage of the alternating current charging station.

In other words, the single-phase threshold is variable, and varies with the input voltage of the alternating current charging station.

In practice, step S102 is detailed as follows. Relays on any two of three-phase cables and a neutral cable are closed. For example, all the relays on the neutral cable and an A-phase cable are closed.

In S103, the alternating current charging station is controlled to supply three-phase power to the electric vehicle through its own charging gun.

The available input power, when greater than or equal to the three-phase threshold, can supply the three-phase power. Therefore, the alternating current charging station supplies the three-phase power to the electric vehicle through its own charging gun.

The alternating current charging station outputs relatively small power when supplying the single-phase power, and therefore charges the electric vehicle slowly. The alternating current charging station outputs relatively large power when supplying the three-phase power, and therefore charges the electric vehicle quickly.

Furthermore, in practice, the three-phase threshold is a product of a three-phase voltage and a three-phase current.

The three-phase current is constant, and the three-phase voltage is obtained by converting the input voltage of the alternating current charging station.

In other words, the three-phase threshold is variable, and varies with the input voltage of the alternating current charging station.

In practice, step S103 includes: closing all relays on the three-phase cables.

It should be noted that, when the neutral cable is provided with relays, all the relays on the neutral cable are also closed.

In the embodiments, the output power of the alternating current charging station is regulated by switching phases for charging, so that the output power of the alternating current charging station can adapt to the available input power, thereby achieving optimal energy efficiency and carbon balance.

In addition, in a case that the available input power is less than the single-phase threshold, the method further includes the following step S104 after step S101.

In S104, the alternating current charging station is controlled to be in a sleep mode instead of charge the electric vehicle.

The available input power, when less than the single-phase threshold, is insufficient to charge the electric vehicle. Therefore, the alternating current charging station stops charging the electric vehicle and switches to the sleep mode.

It should be noted that there is a minimum charging current for charging the electric vehicle. The alternating current charging station, when outputting a charging current less than the minimum charging current, fails to charge the electric vehicle. Generally, the minimum charging current is not less than 6A in order to reliably charge the electric vehicle. The nominal single-phase voltage is 230V and the nominal three-phase voltage is 400V to the European standard. Therefore, the minimum single-phase charging power is about 1.38kW, which is the single-phase threshold, and the minimum three-phase charging power is about 4.156kW, which is the three-phase threshold.

It should be noted that the conventional three-phase alternating current charging station can charge the electric vehicle only when the available input power exceeds the three-phase threshold for the purpose of power point tracking. In comparison, the alternating current charging station in the present disclosure can charge the electric vehicle as long as the available input power is greater than the single-phase threshold, which is more environment friendly. The conventional single-phase alternating current charging station starts the charging when the available input power is greater than the single-phase threshold. However, the maximum power should not exceed 7.4kW. The conventional single-phase alternating current may fail to perform the power point tracking otherwise, resulting in low utilization of green electricity. The power of 7.4kW is specified in the standard, and the maximum single-phase current should not exceed 32A. In comparison, the alternating current charging station in the present disclosure can output a maximum current of 16A and a maximum power of 11kW, and therefore performs power point tracking over a larger range.

In addition, the conventional alternating current charging station can output only three-phase or single-phase power. That is, the same charging station fails to output a voltage varying over time. The alternating current charging station in the embodiments can switch between the three-phase power and the single-phase power, improving the power utilization. Further, the alternating current charging station is applicable to a variety of application scenarios and thus has strong adaptability.

In practice, the method further includes: adapting the output power of the charging gun to the available input power in real time while the alternating current charging station charges the electric vehicle through its own charging gun. That is, the alternating current charging station charges the electric vehicle with a variable current, so that the output power is adapted to the available input power, thereby further optimizing the power utilization.

Specifically, when the available input power is greater than or equal to the single-phase threshold and less than the three-phase threshold, the alternating current charging station is controlled to supply the single-phase power to the electric vehicle through its own charging gun, and regulate its own output current in real time to regulate its own output power.

When the available input power is greater than or equal to the three-phase threshold, the alternating current charging station is controlled to provide the three-phase power to the electric vehicle through its own charging gun, and regulate its own output current in real time to regulate its own output power.

The output power of the alternating current charging station is regulated as follows. The duty cycle is controlled base on the PWM signal, and therefore the output current of the alternating current charging station is regulated. That is, the output current is regulated by controlling the duty cycle based on the PWM signal. In other words, a waveform of the PWM signal is adjusted to control the duty cycle, and then the output current is regulated. For example, the alternating current charging station calculates a current based on an actual output power and converts the current into the PWM signal. Then, the actual charging current supplied to the electric vehicle is regulated based on the duty cycle in the PWM signal. The PWM signal is converted from the current by PWM=I/0.6. 0.6 is specified in the standard IEC61851.

In any of the above embodiments, after step S101, the method further includes: controlling the alternating current charging station to respond to a charging gun signal to perform a switch between the single-phase power and the three-phase power when a demand for the switch is detected during the charging. The charging gun signal may be related to a simulated plugging or unplugging operation, a software wake-up signal, an actual plugging or unplugging operation, which depends on the actual situations.

In an embodiment, the demand for the switch is detected when it is detected that the available input power changes from the single-phase threshold to the three-phase threshold, or when it is detected that the available input power changes from the three-phase threshold to the single-phase threshold.

The alternating current charging station responds to the charging gun signal to perform the switch as follows. In a case that the charging gun signal is a first signal, the alternating current charging station is connected to the electric vehicle. In a case that the charging gun signal is a second signal, the alternating current charging station is disconnected from the electric vehicle.

For example, the charging gun signal is related to the simulated plugging or unplugging. The alternating current charging station automatically performs the simulated plugging operation by communicatively connecting the alternating current charging station to the electric vehicle. The alternating current charging station automatically performs the simulated unplugging operation by communicatively disconnecting the alternating current charging station from the electric vehicle.

During the charging, the alternating current charging station automatically performs the simulated unplugging and plugging operations when the available input power changes from the single-phase threshold to the three-phase threshold or from the three-phase threshold to the single-phase threshold, in order to wake up the electric vehicle. That is because that the electric vehicle may malfunction due to the switch between the single-phase power and the three-phase power. Therefore, the alternating current charging station performs the unplugging operation to stop charging, and then performs the plugging operation to start charging, and therefore reliably charges the electric vehicle at optimal power.

The alternating current charging station automatically performs the simulated unplugging operation by communicatively disconnecting the alternating current charging station from the electric vehicle, for example, disabling the CP (control pilot function), connection confirm function PP, and ground protection conductor PE in European Standard Power System, and disabling the CP, CC, and ground protection conductor PE in the National Standard Power System. The alternating current charging station automatically performs the simulated plugging operation by communicatively connecting the alternating current charging station to the electric vehicle, for example, enabling the CP, connection confirm function PP, and ground protection conductor PE in European Standard Power System, and enabling the CP, CC (connection confirm function), and protection ground conductor PE in the National Standard Power System.

In any of the above embodiments, before step S101, the method further includes: determining whether the alternating current charging station is in a power point tracking mode.

In the power point tracking mode, the output power of the alternating current charging station is adapted to the available input power.

If it is determined that the alternating current charging station is in the power tracking mode, step S101 is executed.

If it is determined that the alternating current charging station is not in the power tracking mode, the alternating current charging station is determined as being in a normal operation mode, and the alternating current charging station is controlled to directly output the maximum power.

In other words, the alternating current charging station is capable of operating in various modes instead of a single mode, for example, the normal operation mode and the power point tracking mode. In the normal operation mode, the alternating current charging station directly outputs the maximum power. In the power point tracking mode, the alternating current charging station adapts the output power of the alternating current charging station to the available input power in real time, thereby achieving optimal energy efficiency and carbon balance.

The charging method is applicable to the European Standard Power System, National Standard Power System or the like, and all of which are within the protection scope of the present disclosure.

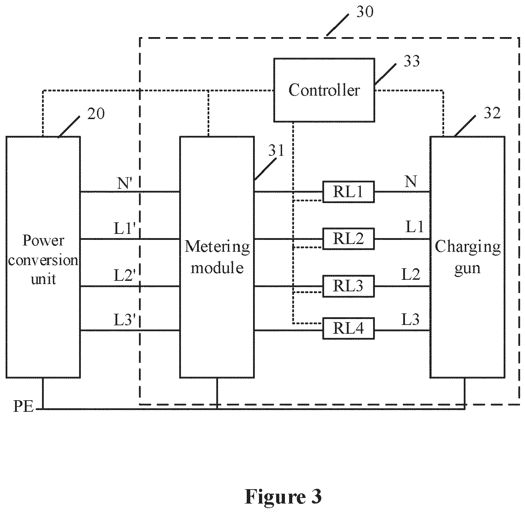

An alternating current charging station is provided according to another embodiment of the present disclosure. Referring to Figure 3, the alternating current charging station 30 includes a metering module 31, a controller 33, and multiple relays (RL1, RL2, RL3 and RL4 as shown in Figure 3) and at least one charging gun 32.

An input end of the metering module 31 serves as the input end of the alternating current charging station 30, and is connected to the power conversion unit 20 to receive the power outputted by the power conversion unit 20.

An output port of the charging gun 32 serves as the output end of the alternating current charging station 30, and is configured to connect the electric vehicle 40 to charge the electric vehicle 40.

The charging gun 32 is connected to the metering module 31 through three-phase cables and a neutral cable. The three-phase cables and the neutral cable each are provided with at least one relay. The three-phase cables are an A-phase cable, a B-phase cable and a C-phase cable.

All the relays are controlled by the controller 33. The controller 33 is communicatively connected to the metering module 31.

The metering module calculates the power received by the alternating current charging station, and transmits a calculation result to the controller.

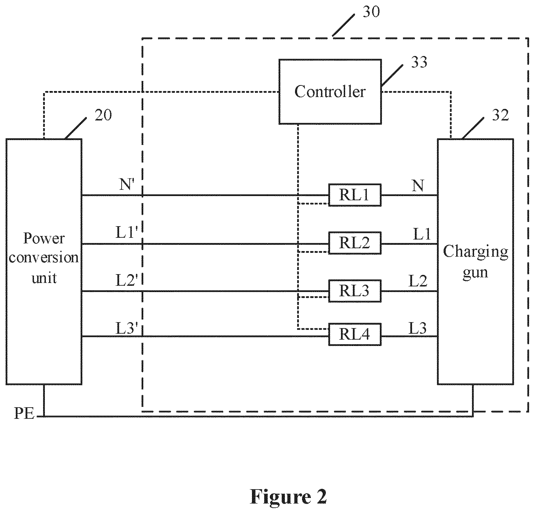

It should be noted that, as shown in Figure 2, the alternating current charging station may include no metering module 31. The neutral cable may also be omitted, i.e., the charging gun 32 is connected to the metering module 31 through only the three-phase cables. Alternatively, the charging gun 32 is connected to the input end of the alternating current charging station 30 through only the three-phase cables. Details about the alternating current charging station 30 are not repeated here and are within the protection scope of the present disclosure.

The controller 33 is configured to perform the charging method. Details about the charging method can refer to the above embodiments, and thus are not repeated here and are within the protection scope of the present disclosure.

According to the above description, the switch between the single-phase power and the three-phase power is performed by turning on the relay on the corresponding cable. It should be noted that the neutral cable should be conductive throughout the charging by the alternating current charging station 30 as specified in the standards. Therefore, throughout the charging by the alternating current charging station 30, all the relays on the neutral cable are constantly closed. Therefore, the switch between the single-phase power and the three-phase power is achieved by controlling the three-phase cables. For instance, when all the relays on the neutral cable are closed and all the relays on the A-phase cable are closed, the alternating current charging station 30 outputs the single-phase power. When all the relays on the neutral cable are closed, all the relays on the A-phase cable are closed, all the relays on the B-phase cable are closed, and all the relays on the C-phase cable are closed, the alternating current charging station 30 outputs the three-phase power.

When the measurement result indicates that the available input power is less than the single-phase threshold, the alternating current charging station 30 is controlled to be in the sleep mode without charging. When the measurement result indicates that the available input power is greater than or equal to the single-phase threshold and less than the three-phase threshold, the alternating current charging station 30 is controlled to supply the single-phase power, and the output current is regulated in real time in order to regulate the output power. When the measurement result indicates that the available input power is greater than or equal to the three-phase threshold, the alternating current charging station 30 supplies the three-phase power, and the output current is regulated in real time in order to regulate the output power.

In other words, the alternating current charging station 30 supplies the single-phase power as follows. All the relays (RL1 and RL2 as shown in Figure 3) on the A-phase cable and the neutral cable are closed. In this case, the output power of the alternating current charging station 30 is equal to P=Va*Ia.

The alternating current charging station 30 supplies the three-phase power as follows. All the relays (RL1, RL2, RL3, RL4 as shown in Figure 3) on the three-phase cables and the neutral cable are closed. In this case, the output power of the alternating current charging station 30 is equal to P=Va*Ia+Vb*Ib+Vc*Ic.

Va is a voltage across the the A-phase cable. Ia is a current following through the A-phase cable. Vb is a voltage across is the B-phase cable. Ib is a current following through the B-phase cable. Vc is a voltage across the C-phase cable. Ic is a current following through the C-phase cable. P is the output power. L1' and L1 represent the A-phase cable. L2' and L2 represent the A-phase cable. L3 ' and L3 represent the C-phase cable. N ' and N represent the neutral cable.

The controller 33 is further configured to communicate with at least one of the power conversion unit 20 and the charging gun 32.

The controller 33 acquires the total power actually outputted by the power conversion unit 20. The controller 33 may further acquire the operating status of the power conversion unit 20, etc., which is not described exhaustively and is within the protection scope of the present disclosure.

The controller 33 may further send a PWM signal to the charging gun 32 to regulate the charging current, thereby regulating the output power of the alternating current charging station 30, which is not described exhaustively and is within the protection scope of the present disclosure.

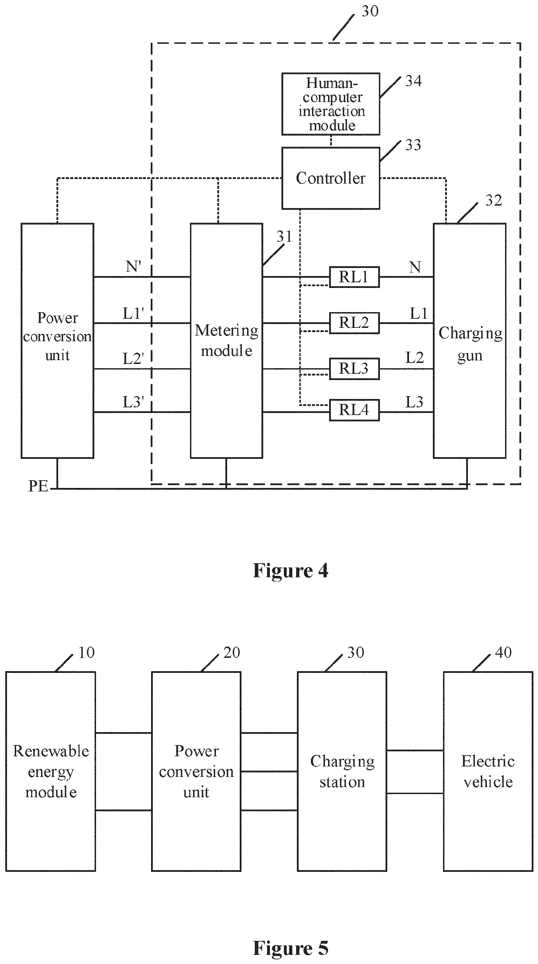

Referring to Figure 4, the alternating current charging station 30 further includes a human-computer interaction module 34 communicating with the controller 33. The user inputs a corresponding control command through the human-computer interaction module 34, to control a charging duration, a start of charging, etc. Further, the status of the alternating current charging station 30, for example, the remaining charging duration, may also be acquired through the human-computer interaction module 34. Details about the operation and the principle of the human-computer interaction module 34 are not specifically limited herein and depend on the actual situations, which are within the protection scope of the present disclosure.

A renewable energy charging system is provided according to another embodiment of the present disclosure. Referring to Figure 5, the renewable energy charging system includes a power conversion unit 20, a renewable energy module 10 and an alternating current charging station 30.

The renewable energy module 10 is connected to the alternating current charging station 30 through the power conversion unit 20.

The power conversion unit 20 or the alternating current charging station 30 is configured to perform the charging method according to any one of the above embodiments. Details about the charging method can refer to the above embodiments, and thus are not repeated here and are within the protection scope of the present disclosure.

In other words, the power conversion unit 20 or the alternating current charging station performs the charging method. Illustrations below are provided in these two cases.

In a first case, the power conversion unit 20 performs the charging method. The alternating current charging station 30 includes a metering module 21, multiple relays (RL1, RL2, RL3 and RL4 as shown in Figure 3) and at least one charging gun 32.

The input end of the metering module 31 serves as the input end of the alternating current charging station 30. The output port of the charging gun 32 serves as the output end of the alternating current charging station 30. The charging gun 32 is connected to the metering module 31 through three-phase cables and a neutral cable. The three-phase cables and the neutral cable each are provided with at least one relay.

All the relays are controlled by a controller inside the power conversion unit 20.

The alternating current charging station may include no metering module 31, depending on actual applications. The neutral cable may also be omitted, i.e., the charging gun 32 is connected to the metering module 31 through only the three-phase cables. Alternatively, the charging gun 32 is connected to the input end of the alternating current charging station 30 through only the three-phase cables. Details about the alternating current charging station 30 are not repeated here and are within the protection scope of the present disclosure.

In practice, the alternating current charging station 30 is integrated with the power conversion unit 40.

In a second case, the alternating current charging station 30 performs the charging method. Referring to Figure 3, the alternating current charging station 30 includes a metering module 31, a controller 33, multiple relays (RL1, RL2, RL3 and RL4 as shown in Figure 3) and at least one charging gun 32.

The input end of the metering module 31 serves as the input end of the alternating current charging station 30, and is connected to the power conversion unit 20 to receive the power outputted by the power conversion unit 20.

The output port of the charging gun 32 serves as the output end of the alternating current charging station 30, and is configured to connect the electric vehicle 40 to charge the electric vehicle 40.

The charging gun 32 is connected to the metering module 31 through three-phase cables and a neutral cable. The three-phase cables and the neutral cable each are provided with at least one relay. The three-phase cables are an A-phase cable, a B-phase cable and a C-phase cable.

All the relays are controlled by the controller 33. The controller 33 is communicatively connected to the metering module 31.

The metering module calculates the power received by the alternating current charging station, and transmits a calculation result to the controller.

The alternating current charging station may include no metering module 31, depending on actual applications. The neutral cable may also be omitted, i.e., the charging gun 32 is connected to the metering module 31 through only the three-phase cables. Alternatively, the charging gun 32 is connected to the input end of the alternating current charging station 30 through only the three-phase cables. Details about the alternating current charging station 30 are not repeated here and are within the protection scope of the present disclosure.

In practice, the alternating current charging station 30 is independently arranged in the charging system.

The alternating current charging station 30 communicates with the power conversion unit 20 in real time.

The alternating current charging station 30 acquires the total output power of the power conversion unit 20 or the operating status of the power conversion unit 20 through the communication, which is not described exhaustively and is within the protection scope of the present disclosure.

The alternating current charging station 30 communicates with the power conversion unit 20 as defined in RS485 or the like, which is not described exhaustively and within the protection scope of the present disclosure.

The renewable energy module 10 includes at least one of a solar power unit 11, a wind power unit 12, an energy storage device (not shown), and a hydrogen energy unit (not shown).

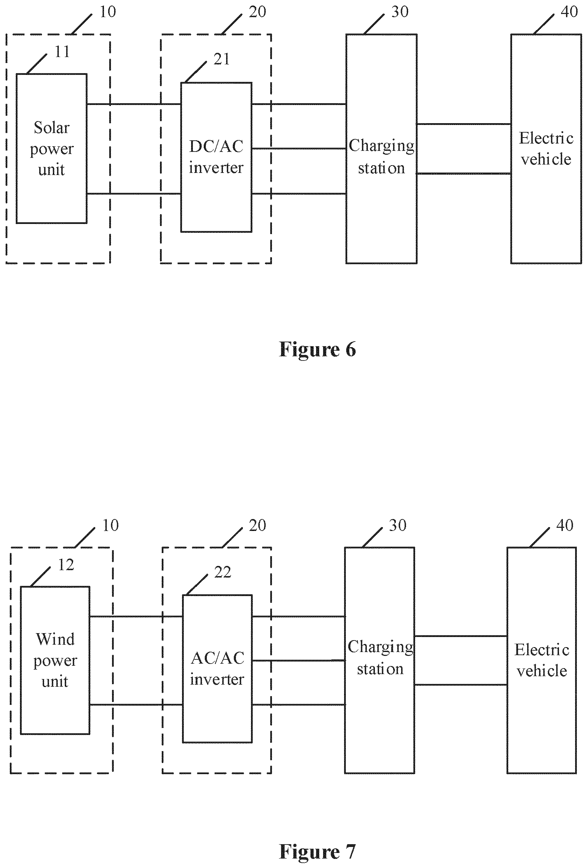

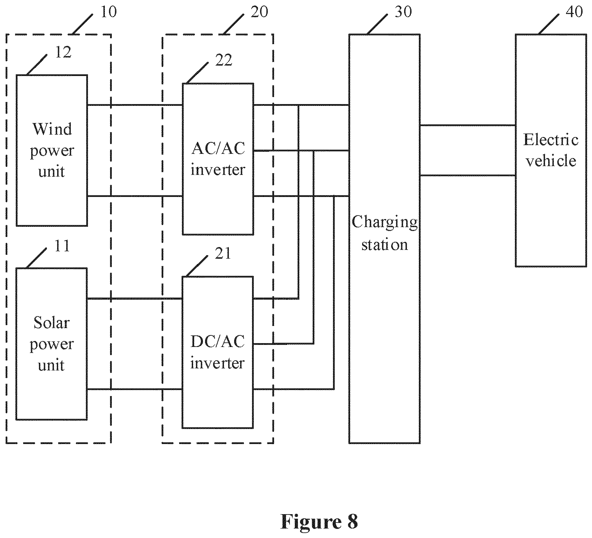

As shown in Figure 6, the renewable energy module 10 is a photovoltaic system. As shown in Figure 7, the renewable energy module 10 is a wind power system. As shown in Figure 8, the renewable energy module 10 is a hybrid power system.

In a case that the renewable energy module 10 includes the solar power unit 11, the power conversion unit 20 includes an alternating current to direct current inverter 21 connected to the solar power unit 11.

In a case that the renewable energy module 10 includes a wind power unit 12, the power conversion unit 20 includes an alternating current to alternating current converter 22 connected to the wind power unit 12.

The features described in the embodiments in this specification may be replaced or combined with each other. The same and similar parts of the various embodiments in this specification can be referred to each other, and each embodiment focuses on the differences from other embodiments. In particular, since the system or the system embodiment is basically similar to the method embodiment, the description thereof is relatively simple, and the related parts can refer to the part of the description of the method embodiment. The systems and system embodiments described above are merely illustrative. The units described as separate components may or may not be physically separated. The components shown as units may or may not be physical units, that is, may be located in the same place or distributed among multiple network elements. Part or all of the modules may be selected according to practical needs to achieve the purpose of the solution of the embodiments, which can be understood and implemented by those skilled in the art without creative efforts.

It should be further noted that the units and algorithm steps of the examples described in conjunction with the embodiments disclosed herein may be implemented by electronic hardware, computer software or a combination of the two. In order to clearly illustrate the possible interchangeability of the hardware and software, details about the steps of each example have been generally described according to their functions in the above description. Whether these functions are implemented by hardware or software depends on the specific applications and design constraints of the technical solution. Those skilled in the art may use different methods to implement the described functions for each specific application, without departing from the scope of the present disclosure.

Embodiments of the present disclosure are described above merely, such that those skilled in the art can implement or use the present disclosure. Those skilled in the art can make various modifications to these embodiments. The general principle defined herein may be applied to other embodiments without departing from the spirit or scope of the present disclosure. Hence, the present disclosure should be defined by the broadest scope consistent with the principle and novel features disclosed herein instead of limited to the embodiments illustrated herein.

## Claims

1. A charging method applied to an alternating current charging station, comprising:
measuring an available input power of a system where the alternating current charging station is arranged;
controlling the alternating current charging station to supply single-phase power to an electric vehicle through a charging gun of the alternating current charging station when the measured available input power is greater than or equal to a single-phase threshold and less than a three-phase threshold, wherein the single-phase threshold is less than the three-phase threshold; and
controlling the alternating current charging station to supply three-phase power to the electric vehicle through the charging gun when the measured available input power is greater than or equal to the three-phase threshold.

2. The charging method according to claim 1, further comprising:
controlling the alternating current charging station to be in a sleep mode instead of charging the electric vehicle when the measured available input power is less than the single-phase threshold, after the measuring the available input power.

3. The charging method according to claim 1, further comprising:
adapting output power of the charging gun to the available input power in real time while charging the electric vehicle by the alternating current charging station through the charging gun.

4. The charging method according to claim 1, wherein
the available input power is grid power, or renewable energy power.

5. The charging method according to claim 1, wherein
the single-phase threshold is a product of a single-phase voltage and a single-phase current; and
the three-phase threshold is a product of a three-phase voltage and a three-phase current, wherein the single-phase current and the three-phase current are constant, and the single-phase voltage and the three-phase voltage each are obtained by converting an input voltage of the alternating current charging station.

6. The charging method according to claim 1, wherein
the controlling the alternating current charging station to supply the single-phase power to the electric vehicle through the charging gun comprises: closing relays on two of three-phase cables and a neutral cable; and
the controlling the alternating current charging station to supply the three-phase power to the electric vehicle through the charging gun comprises: closing all relays on the three-phase cables.

7. The charging method according to any one of claims 1 to 6, further comprising:
controlling the alternating current charging station to respond to a charging gun signal to perform a switch between the single-phase power and the three-phase power when a demand for the switch is detected during the charging, after the measuring the available input power.

8. The charging method according to claim 7, wherein the controlling the alternating current charging station to respond to the charging gun signal to perform the switch comprises:
connecting the alternating current charging station to the electric vehicle in a case that the charging gun signal is a first signal; and
disconnecting the alternating current charging station from the electric vehicle in a case that the charging gun signal is a second signal.

9. The charging method applied the alternating current charging station according to any one of claims 1 to 6, further comprising:
determining whether the alternating current charging station is in a power tracking mode before the measuring the available input power, wherein output power of the alternating current charging station is adapted to the available input power in the power tracking mode, and the available input power is measured when it is determined that the alternating current charging station is in the power tracking mode.

10. The charging method applied the alternating current charging station according to any one of claims 1 to 6, further comprising:
determining that the alternating current charging station is in a normal operation mode and controlling the alternating current charging station to directly output maximum power when it is determined that the alternating current charging station is not in a power tracking mode, after determining whether the alternating current charging station is in the power tracking mode.

11. An alternating current charging station, comprising:
a controller, relays and at least one charging gun, wherein
an output port of the charging gun serves as an output end of the alternating current charging station;
an input end of the alternating current charging station is connected to the charging gun through three-phase cables;
each of the three-phase cables is provided with at least one of the relays;
a neutral cable in the alternating current charging station is provided with at least one of the relays;
all the relays are controlled by the controller; and
the controller is configured to perform the charging method according to any one of claims 1 to 10.

12. The alternating current charging station according to claim 11, wherein
the input end of the alternating current charging station is connected to the charging gun through the neutral cable, and the neutral cable is provided with at least one of the relays.

13. The alternating current charging station according to claim 11, further comprising:
a metering module, wherein the metering module is arranged between the relays and the input end of the alternating current charging station, and the controller is communicatively connected to the metering module.

14. The alternating current charging station according to claim 11, wherein
the controller is further configured to communicate with at least one of a power conversion unit in a system where the controller is arranged and the charging gun.

15. The alternating current charging station according to any one of claims 11 to 14, further comprising:
a human-computer interaction module configured to communicated with the controller.

16. A renewable energy charging system, comprising:
a power conversion unit, a renewable energy module and an alternating current charging station, wherein
the renewable energy module is connected to the alternating current charging station through the power conversion unit; and
the power conversion unit or the alternating current charging station is configured to perform the charging method according to any one of claims 1 to 10.

17. The renewable energy charging system according to claim 16, wherein
the alternating current charging station comprises relays and at least one charging gun, and wherein
an input end of the alternating current charging station is connected to the charging gun through three-phase cables;
each of the three-phase cables is provided with at least one relay; and
an output port of the charging gun serves as an output end of the alternating current charging station.

18. The renewable energy charging system according to claim 17, wherein
all the relays are controlled by a controller inside the power conversion unit for the power conversion unit to perform the charging method; and
the alternating current charging station further comprises a controller for the alternating current charging station to perform the charging method, wherein all the relays are controlled by the controller of the alternating current charging station, and the controller of the alternating current charging station is communicatively connected to the metering module.

19. The renewable energy charging system according to claim 18, wherein the alternating current charging station is integrated with the power conversion unit.

20. The renewable energy charging system according to claim 18, wherein
the alternating current charging station is independently arranged in the renewable energy charging system; and
the controller of the alternating current charging station is configured to communicate with the controller inside the power conversion unit in real time.

21. The renewable energy charging system according to any one of claims 16 to 20, wherein the renewable energy module comprises:
at least one of a solar power unit, a wind power unit, an energy storage device and a hydrogen energy unit.
